# EUROPÄISCHE PATENTANMELDUNG

(11) **EP 2 039 410 A1**
(43) Veröffentlichungstag der Anmeldung: **25.03.2009**
(21) Anmeldenummer: 08021698.9
(22) Anmeldetag: 23.11.2004
(51) Int. Cl.: B01D 29/52, B01D 29/66, B01D 29/96

(54) **Filtervorrichtung**

(30) Priorität: 30.01.2004 DE 102004004756
(62) Teilanmeldung aus: 04803229.6
(71) Anmelder: Hydac Process Technology GmbH, 66538 Neunkirchen (DE)
(72) Erfinder: Wnuk, Ralf, Dr., 66450 Bexbach/Kleinottweiler (DE); Maretyak, Markus, 66978 Clausen (DE)
(74) Vertreter: Bartels & Partner

(57) **Zusammenfassung**

Die Erfindung betrifft eine Filtervorrichtung für den Einsatz von Filterelementen (28), wobei einzelne Filterelemente (28) sich in einem schwenkbaren Aufnahmeteil (32) erstrecken, das ein unteres Endteil (40) aufweist, das von einer vorzugsweise nierenförmigen Ausnehmung (40) unterbrochen ist, wobei mehrere Filterelemente (28) gemeinsam über ihren jeweils unteren freien Öffnungsquerschnitt (46) für die Filtration mit zu filtrierendem Fluid versorgt sind, das von innen nach außen diese Filterelemente (28) durchströmt, und dass das jeweils rückzuspülende Filterelement (28) außerhalb der Ausnehmung (44) im Aufnahmeteil (32) angeordnet von außen nach innen durchströmt ist.

## Beschreibung

Die Erfindung betrifft eine Filtervorrichtung für den Einsatz von Filterelementen gemäß der Merkmalsausgestaltung des Oberbegriffes des Patentanspruches 1.

Eine Filtervorrichtung, insbesondere Rückspülfiltervorrichtung, ist durch die WO 98/42426 bekannt. Bei der bekannten Rückspülfiltervorrichtung ist ein Teil der eingesetzten Filterelemente konisch ausgebildet, insbesondere in Form von sog. Spaltsiebrohr-Filterelementen. Aufgrund der konischen Ausbildung ist der Abstand zwischen den einzelnen konischen Spaltsiebrohr-Filterelementen oder zwischen diesen und zylindrischen Filterelementen vergrößert, mit der Folge, dass auch der Ausströmraum im Filtergehäuse vergrößert und mithin der Abströmwiderstand im Filterbetrieb erniedrigt ist. Beim Rückspülen ist das konische Filterelement gegen ein zylindrisches Element eindeutig im Vorteil. Ursache hierfür ist in erster Linie der relativ größere Austrittsquerschnitt der konischen Filterelemente gegenüber zylindrischen bei gleicher Filteroberfläche. Da der Austrittsquerschnitt bei den konischen Filterelementen gegenüber dem durch die Filteroberfläche gebildeten Eintrittsquerschnitt, also der freien Elementfläche, jedoch relativ klein ist, bildet sich hier abhängig von der Größe des Strömungswiderstandes des Spaltrohres ein Engpaß, indem ein großer Teil des Systemdruckes abfällt. Es treten also geringere Druckverluste auf, was energetisch beim Rückspülen günstiger ist.

Beim Rückspülen wird ein Großteil des Volumendurchsatzes bei konischen und zylindrischen Filterelementen grundsätzlich am unteren Filterende erzielt. Die Volumenströme nehmen dann sehr schnell ab. Da das konische Element wesentlich weiter zurückgespült wird, ist zusätzlich der Geschwindigkeitsgradient geringer, so dass unter Einbeziehung der Geschwindigkeitsprofile bezogen auf die Filteroberfläche sich aufgrund der Elementkonizität ein zusätzlicher Reinigungseffekt gegenüber zylindrischen Elementen ergibt. Durch die erreichte, im wesentlichen konstante Geschwindigkeit bei der Abreinigung der konischen Filterelemente erfolgt dies schonend, was die Standzeit dahingehender Filterelemente verlängert.

Beim Rückspülen werden vorzugsweise alle Filterelemente in chronologischer Abfolge nacheinander regeneriert. Während der Rückspülung einzelner Elemente wird die Filtration über die restlichen Spaltrohre fortgesetzt, so dass der Filtrationsbetrieb bei der bekannten Lösung zu keiner Zeit unterbrochen wird. Der in der Rückspülfiltervorrichtung anstehende Überdruck läßt während der Rückspülphase einen geringen Teilstrom des Filtrates das zu reinigende Filterelement in umgekehrter Richtung durchströmen, wobei der Schmutz vom Element abgelöst und ausgetragen wird. Die mit der Rückspülung einhergehende Ablaufmenge ist nicht genau dosierbar und beruht auf Erfahrungswerten. In der Regel wird zeitlich länger mit großen Mengen rückgespült, um die sichere Abreinigung zu gewährleisten.

Bei anderen bekannten Lösungen (WO 98/42426, DE 195 42 578 und DE 199 56 859) wird unter das abzureinigende und mithin rückzuspülende Filterelement zur Abfuhr der verschmutzten Fluidrückspülmenge ein Hohlarm unter den einen freien Eintrittsquerschnitt des Filterelementes verschwenkt und von dort aus gelangt die Rückspülmenge über entsprechende Anschlußstücke aus dem Filtergehäuse zur weiteren Aufbereitung heraus. Bei den dahingehend bekannten Lösungen kommt es gegebenenfalls zu Abdichtproblemen im Hinblick auf das Anschließen des Spülarmes an das jeweils rückzuspülende Filterelement und im übrigen benötigt die dahingehende Abfuhreinrichtung für die Rückspülmenge entsprechend viel Einbauraum. Auch kommt es im Hinblick auf die Anzahl an Fluidumlenkungen für die Rückspülmenge bei den bekannten Lösungen zu energetisch ungünstigen Betriebszuständen und zum Bewegen des Spülarmes wird ein entsprechend groß dimensionierter Elektromotor eingesetzt.

Durch die EP-A-0 900 584 ist eine gattungsgemäße Filtervorrichtung als Rückspülfilter für den Einsatz von Filterelementen bekannt, die in einem Filtergehäuse mit einem Filtereinlaß und einem Filterauslaß für das zu filtrierende Fluid aufnehmbar sind, wobei die Filterelemente für eine Filtration oder Rückspülung in beiden Richtungen durchströmbar sind und in einem Aufnahmeteil des Filtergehäuses aufgenommen sich zwischen einem oberen Endteil und einem unteren Endteil erstrecken, wobei die einen Filterelemente in einer Filtrationsstellung die Filtration vornehmen und zumindest ein anderes weiteres Filterelement zum Abreinigen seiner wirksamen Filterfläche in einer Rückspülstellung rückspülbar ist, und wobei mittels einer Schwenkeinrichtung die einzelnen Filterelemente nacheinander von ihrer Filtrationsstellung in die Rückspülstellung und wieder in die Filtrationsstellung gebracht sind.

Bei der bekannten Lösung ist als Teil der genannten Schwenkeinrichtung ein Drehkörper vorgesehen, der auf seinem Umfang mehrere, in gleichen Umfangsabständen zueinander angeordnete Filterkammern aufweist, die jeweils einen Filtereinsatz in Gestalt des kerzenartigen Filterelementes aufnehmen, wobei die parallel zueinander und zur Schwenkachse der Schwenkeinrichtung angeordneten Filterelemente sich im wesentlichen über die gesamte Höhe des Drehkörpers als Aufnahmeteil erstrecken. Für eine Filtration werden die dahingehenden Filterelemente von außen nach innen durchströmt und bei einer Umlaufbewegung des Drehkörpers in eine Rückspülzone der Filtervorrichtung wird eine von dem Filterkreislauf abgetrennte Rückspülkammer gebildet, in der die Filterelemente einzeln oder gruppenweise im Gegenstrom, also von innen nach außen, rückspülbar sind. Für die Rückspülung ist ein eigenständiger Rückspülkanal innerhalb der Filtervorrichtung vorgesehen, der an eine Druckgas- bzw. Druckluftquelle angeschlossen ist, über die die genannte Filterkerze in der insoweit abgeschlossenen Rückspülkammer schlagartig mit Druck beaufschlagt wird, um dergestalt die im Filterbetrieb an der Filterkerze anhaftenden Verschmutzungen nach außen abzuführen.

Ausgehend von diesem Stand der Technik liegt der Erfindung die Aufgabe zugrunde, unter Beibehalten der beschriebenen Vorteile die bekannten Filtervorrichtungen dahingehend teilweise weiter zu verbessern, dass Abdichtprobleme beim Rückspülen weitestgehend vermieden sind, dass eine energetisch günstige Rückspülung ermöglicht ist und dass für das Rückspülen an der Filtervorrichtung nur wenig Einbauraum benötigt wird. Eine dahingehende Aufgabe löst eine Filtervorrichtung mit den Merkmalen des Patentanspruches 1 in seiner Gesamtheit.

Dadurch, dass das untere Endteil eine, vorzugsweise nierenförmige, Ausnehmung aufweist, mittels der mehrere Filterelemente gemeinsam über ihren jeweils unteren freien Öffnungsquerschnitt für die Filtration mit zu filtrierendem Fluid versorgt sind, das von innen nach außen diese Filterelemente durchströmt, und dass das jeweils rückzuspülende Filterelement außerhalb der Ausnehmung im Aufnahmeteil angeordnet von außen nach innen durchströmt ist, ist gewährleistet, dass bei der dahingehenden Umstellbewegung zwischen Filtration und Rückspülung weitestgehend kontinuierlich mit mehreren Filterelementen weiter filtriert werden kann. Der jeweilige Rückspülvorgang für ein Filterelement kann in quasi - kontinuierlichen Zeitabständen erfolgen; es besteht aber auch die Möglichkeit, über Differenz-Druckmessungen an den Filterelementen jeweils festzustellen, wann eine Rückspülung vorzunehmen ist, so dass bei entsprechender Steuerung unmittelbar das rückzuspülende Element unmittelbar der Rückspülöffnung innerhalb des Filterkreislaufes zuzuführen ist.

Solange die zur Filtration eingesetzten Filterelemente mit ihrem unteren freien Öffnungsquerschnitt über der, vorzugsweise nierenförmigen, Ausnehmung im unteren Endteil verbleiben, strömt zu filtrierendes Fluid über den Filtereinlaß und die Ausnehmung sowie den unteren Öffnungsquerschnitt in das Innere des jeweiligen Filterelementes ein und durchströmt dabei die Filterelemente von innen nach außen. Etwaig im Fluid befindliche Verschmutzungen werden dann auf der inneren Wandung des jeweiligen Hohlfilterelementes abgelagert. Das zur Rückspülung jeweils vorgesehene Filterelement wird dann von dem im Filtergehäuse befindlichen Filtrat oder Reinfluid als Teil des Filterkreislaufs in Umkehrrichtung, also von außen nach innen, abgereinigt, wobei die derart abgereinigten und erhaltenen Fluidverschmutzungen aus dem Inneren des zur Rückspülung verwendeten Filterelementes und wiederum über seinen unteren freien Öffnungsquerschnitt in Richtung des Fluidauslasses und mithin aus der Vorrichtung gelangt.

Da sich die Schwenkbewegung für die Filterelemente gut kontrollieren läßt, lassen sich etwaig bestehende Abdichtungsprobleme gut beherrschen. Ferner benötigt die erfindungsgemäße Filtervorrichtung, bezogen auf die Abdichtungsgestaltung sowie den Schwenkantrieb, für die Filterelemente innerhalb des Filtergehäuses weniger Bauraum, so dass sich auch bei beengten Platzverhältnissen dahingehende Filtervorrichtungen mit Rückspülmodus realisieren lassen, was in der Vergangenheit zumindest teilweise Probleme bereitet hat. Des weiteren ergibt sich mit der erfindungsgemäßen Lösung ein verbessertes An- und Abströmverhalten für die zu steuernden Fluidmengen, auch bezogen auf die Rückspülfluidmengen, was energetisch betrachtet dem Filtrationsbetrieb der Gesamt-Filtervorrichtung zugute kommt.

Während bei einem Teil den bekannten Rückspülfiltervorrichtungen für die Rückspülung ein antreibbarer Spülarm vorgesehen ist, der für einen Fluidaustritt für verschmutztes Fluid nacheinander unter die freien Einlaßquerschnitte der Filterelemente zu verfahren ist, braucht mit der erfindungsgemäßen Filtervorrichtung die Schwenkeinrichtung nur ein entsprechend konzipiertes Aufnahmeteil für die Aufnahme der Filterelemente, das dann mittels eines Antriebes um die Schwenkachse der Schwenkeinrichtung drehbar innerhalb des Filtergehäuses geführt das Anfahren der einzelnen Filterelemente für eine Rückspülung zu der Rückspülstation ermöglicht.

Vorzugsweise ist dabei vorgesehen, dass das untere Endteil, das dem Filtereinlaß zugewandt ist, entlang des Inneren des Filtergehäuses über eine Dichteinrichtung drehbar geführt ist. Ferner ist über die jeweiligen Endteile des Aufnahmeteils ein rascher Auswechselvorgang für verbrauchte Filterelemente erreicht, sofern diese einmal gegen neue Elemente zu tauschen sind, und die genannte Dichteinrichtung läßt sich von ihrer Dichtwirkung her sicher konzipieren und langfristig betreiben.

Bei einer weiteren besonders bevorzugten Ausführungsform der erfindungsgemäßen Filtervorrichtung ist ein Teil des Filtergehäuses als Deckel konzipiert und weist zu seinen freien Enden hin einen Hohlraum auf, dessen axiale Erstreckung in etwa der Baulänge der Filterelemente entspricht. Bei einem Filtrationsbetrieb, bei dem die vorzugsweise konischen Spaltsiebrohr-Filterelemente von innen nach außen durchströmt werden, ergibt sich im oberen Teil des Filtergehäuses ein Fluidsammelraum, der dem Filtrationsbetrieb wenig Hemmnisse entgegensetzt und somit sich von der Gesamt-Energiebi lanz der Filtervorrichtung her gesehen als ausgesprochen günstig erweist, was auch für den Fall gilt, dass von dort entsprechende Mengen für den Rückspülbetrieb eingesetzt werden, bei dem in umgekehrter Folge von außen nach innen das zur Rückspülung anstehende Filterelement mit Fluid durchströmt wird.

Weitere vorteilhafte Ausgestaltungen sind Gegenstand der sonstigen Unteransprüche.

Im folgenden wird die erfindungsgemäße Filtervorrichtung anhand eines Ausführungsbeispiels nach der Zeichnung näher erläutert. Dabei zeigen in prinzipieller und nicht maßstäblicher Darstellung die
- Fig.1: einen Längsschnitt durch die Filtervorrichtung;
- Fig.2: eine perspektivische Seitenansicht auf die Filtervorrichtung nach der Fig.1 und
- Fig.3: teilweise im Schnitt, teilweise in Ansicht, eine Draufsicht auf die Filtervorrichtung nach den Fig.1 und 2.

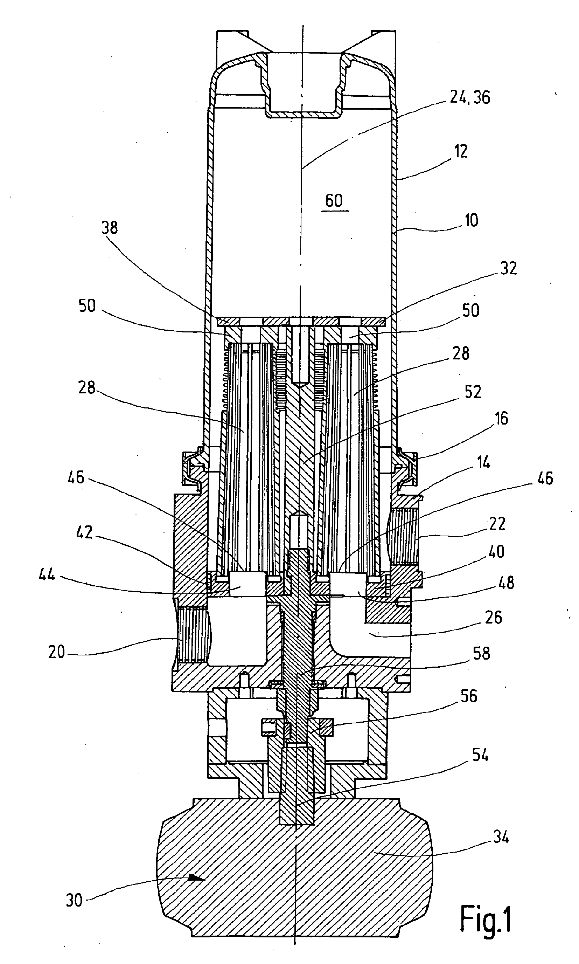

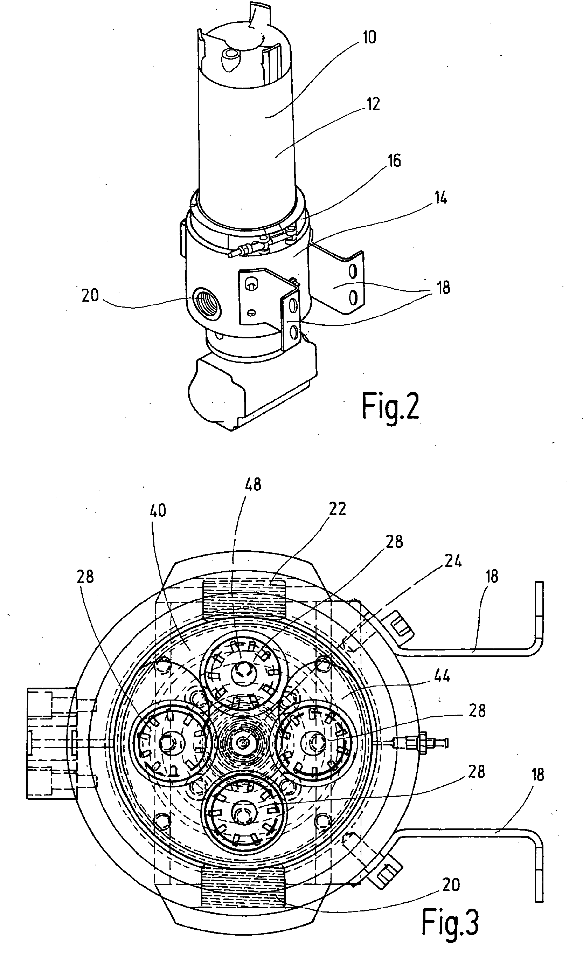

Die in der Fig. 1 gezeigte Filtervorrichtung, insbesondere Rückspülfiltervorrichtung, weist ein zylindrisches Gehäuse 10 auf, bestehend aus einem oberen Gehäuseteil 12 und einem unteren Gehäuseteil 14. Die beiden Gehäuseteile 12,14 lassen sich insbesondere über ein lösbare Konsolenschelle 16 (vgl. Fig.2) lösbar miteinander verbinden. Des weiteren läßt sich das Gehäuse 10 über das untere Gehäuseteil 14 mittels flanschartiger Befestigungsteile 18 an anderen Bauteilen, beispielsweise solche hydraulischer Art, festlegen. Das Filtergehäuse 10 der Rückspülfiltervorrichtung weist des weiteren einen Filtereinlaß 20 auf für das zu filtrierende Fluid sowie einen Filterauslaß 22 für das filtrierte Fluid. Diametral der Längsachse 24 gegenüberliegend ist zu dem Filtereinlaß 20 innerhalb des unteren Gehäuseteils 14 ein Fluidauslaß 26 angeordnet, über den die Rückspülfluidmenge aus der Vorrichtung abführbar ist.

In die Filtervorrichtung sind nach oben hin konisch zulaufende Filterelemente 28 eingesetzt, wobei an die Stelle der konischen Filterelemente 28 auch zumindest teilweise zylindrische Filterelemente (nicht dargestellt) treten können. Die angesprochenen konischen Filterelemente 28, die aus sog. Spaltsiebrohr-Filterelementen bestehen können, sind in Abständen voneinander entlang eines zylindrischen Kreisbogens (vgl. Fig.3) innerhalb des Filtergehäuses 10 angeordnet. Bei einer nicht näher dargestellten Ausführungsform können auch in Gruppen unterteilt mehrfach entlang von zylindrischen Bögen die Filterelemente 28 angeordnet sein. Bei der in den Figuren gezeigten Ausführungsform sind jedoch insgesamt vier Filterelemente 28 diametral einander zur Längsachse 24 der Vorrichtung gesehen gegenüberliegend angeordnet. In Blickrichtung auf die Fig.3 gesehen ist dabei das obere Filterelement 28 in seiner Rückspülstellung gezeigt und die darunter angeordneten Filterelemente 28 befinden sich in ihrer Filtrationsstellung.

Mittels einer als Ganzes mit 30 bezeichneten Schwenkeinrichtung ist es möglich, die einzelnen Filterelemente 28 nacheinander von ihrer Filtrationsstellung in die Rückspülstellung und wieder in die Filtrationsstellung zu bringen, wobei die Umlaufbewegung für die einzelnen Filterelemente 28 sowohl im Uhrzeigersinn als auch im Gegenuhrzeigersinn erfolgen kann. Die Schwenkeinrichtung 30 selbst weist ein Aufnahmeteil 32 auf für die Aufnahme der einzelnen Filterelemente 28, wobei das Aufnahmeteil 32 mittels eines Antriebes oder Motors 34 um eine Schwenkachse 36 drehbar innerhalb des Filtergehäuses 10 angeordnet ist. Die dahingehende Schwenkachse 36 ist im wesentlichen deckungsgleich mit der Längsachse 24 der Filtervorrichtung.

Das Aufnahmeteil 32 weist zwei gegenüberliegende Endteile 38,40 auf, zwischen denen sich die einzelnen Filterelemente 28 erstrecken, wobei zumindest das Endteil 40, das dem Filtereinlaß 20 zugewandt ist, entlang des Inneren des Filtergehäuses 10 über eine Dichteinrichtung 42 geführt ist. Das jeweilige Endteil 38,40 ist in der Art einer zylindrischen Platte ausgebildet und das untere Endteil 40 weist außenumfangsseitig Ausnehmungen zur Aufnahme von Dichtteilen der Dichteinrichtung 42 auf, wobei derart eine Gleitdichtung erreicht ist zwischen dem Inneren des Filtergehäuses 10 und dem Außenumfang des unteren Endteils 40.

Wie sich insbesondere aus der Fig.3 ergibt, weist das untere Endteil 40 eine nierenförmige Ausnehmung 44 auf, die von dem Filtereinlaß 20 mit Fluid versorgbar ist. Solange gemäß der Darstellung nach der Fig. 3 die drei Filterelemente 28 mit ihrem unteren freien Öffnungsqueschnitt 46 über der nierenförmigen Ausnehmung 44 angeordnet sind, strömt zu filtrierendes Fluid über den Filtereinlaß 20 und die Ausnehmung 44 sowie den unteren Öffnungsquerschnitt 46 in das Innere des jeweiligen Filterelementes 28 ein und durchströmt dabei die Filterelemente 28 von innen nach außen. Etwa im Fluid befindliche Verschmutzungen werden dann auf der inneren Wandung des jeweiligen Hohlfilterelementes abgelagert. Das in Blickrichtung auf die Fig.3 gesehen obere Filterelement 28 ist hiervon ausgenommen und das im Filtergehäuse 10 befindliche Filtrat oder Reinfluid wird in Umkehrrichtung, also von außen nach innen, durch das abzureinigende obere Filterelement 28 geleitet, wobei die derart abgereinigten und erhaltenen Fluidverschmutzungen aus dem Inneren des zur Rückspülung verwendeten Filterelementes 28 und wiederum über seinen unteren freien Öffnungsquerschnitt 46 in Richtung des Fluidauslasses 26 und mithin aus der Vorrichtung gelangt.

Für den dahingehenden Rückspül-Fluidtransport weist das untere Endteil 40 eine kreisförmige Durchlaßöffnung 48 auf. Am gegenüberliegenden Ende, also nach oben hin, sind die einzelnen Filterelemente 28 abgeschlossen und in dem oberen Endteil 38 aufgenommen, das insofern über Einzelaufnahmen 50 verfügt, in die die oberen freien Enden der Filterelemente 28 eingreifen. Die beiden Endteile 38,40 sind längs der Schwenkachse 26 über ein stabartiges Antriebsteil 52 lösbar miteinander verbunden. Insoweit wäre es also möglich, bei abgenommenem oberen Deckelteil 12 und Lösen der beiden Endteile 38,40 voneinander ein verbrauchtes Filterelement 28 gegen ein neues Element auszutauschen, sofern dies einmal notwendig werden sollte. Das dahingehende Antriebsteil 52 ist von dem Antrieb 34 der Filtervorrichtung antreibbar, der insbesondere in der Art eines Pneumatik-Motors ausgebildet ist.

Der dahingehende Pneumatik-Motor ist dadurch gekennzeichnet, dass sein zapfenartiges Abtriebsteil 54 in Abhängigkeit von der Pumpbewegung der Kolbenteile des Pneumatik-Motors als Antrieb 34 eine alternierende Hin- und Herbewegung durchführt, wobei die dahingehende Hin- und Herbewegung dann mittels einer Freilaufeinrichtung 56 in eine konstante Antriebsbewegung in einer Antriebsrichtung für das Antriebsteil 52 des Aufnahmeteils 32 umsetzbar ist. Als Freilaufeinrichtung 56 kommt dabei insbesondere eine Freilaufhülse zum Einsatz, die mit ihren bewegbaren Komponenten das Abtriebsteil 54 mit dem Antriebsteil 52 koppelt. Für die dahingehende Kopplung ist das stabartige Antriebsteil 52 in Blickrichtung auf die Fig.1 gesehen auf seiner Unterseite mit einer Antriebsachse 58 gekoppelt, die dreh- oder schwenkbar im unteren Gehäuseteil 14 geführt ist.

Die in Rede stehende Freilaufhülse der Freilaufeinrichtung 56 ist in der Lage, die alternierende Hin- und Herbewegung des Antriebes 34 nur in einer Richtung an den Antriebsstrang der Schwenkeinrichtung 30 weiterzugeben, bestehend aus Abtriebsteil 54, Antriebsachse 58 und Antriebsteil 52. In der anderen Richtung überträgt die Freilaufeinrichtung 56 kein Drehmoment an den dahingehenden Antriebsstrang. Die hier zum Einsatz kommende Freilaufhülse mit Innenstern und einzeln angefederten Laufrollen, die jedoch Stand der Technik ist, ist aufgrund ihres geringen Schlupfes bis zum Mitnehmen der Antriebsachse 58 besonders geeignet. Bei der gegenläufigen Drehbewegung für die Freilaufhülse wird dann kein Moment an die Vorrichtung und mithin an den Antriebsstrang abgegeben. Dahingehende Freilaufhülsen und Freilaufeinrichtungen 56 sind Stand der Technik, so dass an dieser Stelle hierauf nicht mehr näher eingegangen wird. Die Antriebsachse 58 kann auch mehrteilig ausgeführt sein, um bei Verschleiß die Auswechselbarkeit von Teilen der dahingehenden Achse zu gewährleisten.

Mit dem genannten Antriebskonzept ist es also möglich, die alternierende Hin- und Herbewegung des Pneumatik-Motors als Antrieb 34 in eine Schwenkbewegung um jeweils 90° für die Filterelemente 28 mittels der Schwenkeinrichtung 30 vorzusehen, um dergestalt in Hintereinanderabfolge immer ein Filterelement 28 in der Rückspülstellung abzureinigen und mit den drei anderen Filterelementen den üblichen Filtrationsbetrieb aufrecht zu erhalten. Bei einer anderen Anzahl an Filterelementen 2,3 oder 5 und mehr ist dann eine andere Stufung für die Drehbewegung über die Freilaufhülse notwendig. Aufgrund der nierenartigen Ausgestaltung der Ausnehmung 44 im unteren Endteil 40 ist darüber hinaus gewährleistet, dass bei der dahingehenden Umstellbewegung weitgehend kontinuierlich mit immer drei Elementen weiter filtriert werden kann. Der jeweilige Rückspülvorgang für ein Filterelement 28 kann in quasi kontinuierlichen Zeitabständen erfolgen; es besteht aber auch die Möglichkeit, über Differenz-Druckmessungen an den Filterelementen 28 jeweils festzustellen, wann dieses für eine Rückspülung zu verwenden ist und das dahingehende Element könnte bei entsprechender Steuerung unmittelbar der Rückspülöffnung 48 zugeführt werden.

Wie sich des weiteren aus der Schnittdarstellung nach der Fig.1 ergibt, weist das obere Gehäuseteil 12 einen freien Hohlraum 60 auf, dessen axiale Erstreckung in etwa der Baulänge der Filterelemente 28 entspricht. Die dahingehende Anordnung hat sich als energetisch besonders günstig erwiesen und der der Durchströmung der Filterelemente 28 im üblichen Filtrationsbetrieb entgegenstehende Widerstand, gebildet durch den Widerstand von Gehäuseteilen des Gehäuses 10, ist dergestalt deutlich verringert. Auch kommt es innerhalb des Hohlraumes 60 zu einem im wesentlichen laminaren Strömungsverhalten, was den Ausströmwiderstand im üblichen Filtrationsbetrieb reduzieren hilft.

Die vorzugsweise zum Einsatz kommenden Spaltsiebrohr-Filterelemente weisen in Richtung der Längsachse 24 der Vorrichtung geneigte Stützstäbe auf, um die unter Freilassen von durch ein Fluid passierbaren Spalten ein Drahtprofil in einzelnen Windungen gewickelt ist, wobei im Bereich einer jeden Berührstelle des Drahtprofils mit dem Stützstab ein Schweißpunkt angeordnet ist. Die für den freien Fluiddurchtritt vorgesehene Spaltgröße, also der Abstand zwischen zwei Spalten, verhindert den Durchtritt von Verschmutzungen, sofern die Partikelgröße die dahingehende Spaltweite übersteigt. In den Spalten festgesetzte Verschmutzungen lassen sich dann über den beschriebenen Rückspülbetrieb aus der Filtervorrichtung entfernen. Das derart abgereinigte Filterelement 28 gelangt dann von der Rückspülstellung zurück in die Filtrationsstellung und kann dort für den weiteren Filtrationseinsatz verwendet werden.

## Patentansprüche

1. Filtervorrichtung für den Einsatz von Filterelementen (28), die in einem Filtergehäuse (10) mit einem Filtereinlaß (20) und einem Filterauslaß (22) für das zu filtrierende Fluid aufnehmbar sind, wobei die Filterelemente (28) für eine Filtration oder Rückspülung in beiden Richtungen durchströmbar sind und in einem Aufnahmeteil (32) des Filtergehäuses (10) aufgenommen sich zwischen einem oberen Endteil (38) und einem unteren Endteil (40) erstrecken, wobei die einen Filterelemente (28) in einer Filtrationsstellung die Filtration vornehmen und zumindest ein anderes weiteres Filterelement (28) zum Abreinigen seiner wirksamen Filterfläche in einer Rückspülstellung rückspülbar ist, und wobei mittels einer Schwenkeinrichtung (30) die einzelnen Filterelemente (28) nacheinander von ihrer Filtrationsstellung in die Rückspülstellung und wieder in die Filtrationsstellung gebracht sind, **dadurch gekennzeichnet, dass** das untere Endteil (40) eine, vorzugsweise nierenförmige, Ausnehmung (44) aufweist, mittels der mehrere Filterelemente (28) gemeinsam über ihren jeweils unteren freien Öffnungsquerschnitt (46) für die Filtration mit zu filtrierendem Fluid versorgt sind, das von innen nach außen diese Filterelemente (28) durchströmt, und dass das jeweils rückzuspülende Filterelement (28) außerhalb der Ausnehmung (44) im Aufnahmeteil (32) angeordnet von außen nach innen durchströmt ist.

2. Filtervorrichtung nach Anspruch 1, **dadurch gekennzeichnet, dass** die Schwenkeinrichtung (30) mit dem Aufnahmeteil (32) für die Aufnahme der Filterelemente (28) mittels eines Antriebes (34) um eine Schwenkachse (36) drehbar innerhalb des Filtergehäuses (10) angeordnet ist.

3. Filtervorrichtung nach Anspruch 1 oder 2, **dadurch gekennzeichnet, dass** das untere Endteil (40), das dem Filtereinlaß (20) zugewandt ist, entlang des Inneren des Filtergehäuses (10) über eine Dichteinrichtung (42) drehbar geführt ist.

4. Filtervorrichtung nach Anspruch 2 oder 3, **dadurch gekennzeichnet, dass** die Filterelemente (28) koaxial zu der Schwenkachse (36) innerhalb des Filtergehäuses (10) angeordnet sind, die durch ein stabartiges Antriebsteil (52) gebildet ist, das die beiden Endteile (38,40) des Aufnahmeteils (32) lösbar miteinander verbindet.

5. Filtervorrichtung nach Anspruch 4, **dadurch gekennzeichnet, dass** das Antriebsteil (52) von einem Antrieb (34), insbesondere in Form eines Pneumatik-Motors, antreibbar ist, dessen alternierende Hin- und Herbewegung für sein Abtriebsteil (54) mittels einer Freilaufeinrichtung (56) in eine konstante Antriebsbewegung in einer Antriebsrichtung für das Antriebsteil (52) des Aufnahmeteils (32) umsetzbar ist.

6. Filtervorrichtung nach Anspruch 5, **dadurch gekennzeichnet, dass** die Freilaufeinrichtung (56) aus einer Freilaufhülse gebildet ist, die bis zu einem vorgebbaren Drehmoment die Antriebsleistung des Antriebes (34) an das Antriebsteil (52) in einer Richtung abgibt und in der anderen gegenläufigen Richtung kein Antriebsmoment aufbringt.

7. Filtervorrichtung nach einem der Ansprüche 2 bis 6, **dadurch gekennzeichnet, dass** die einzelnen Filterelemente (28) konisch ausgebildet und zur Schwenkachse (36) diametral einander gegenüberliegend im Filtergehäuse (10) angeordnet sind und dass dem Antrieb (34) zugewandt die Filterelemente (28) derart ihre weiteste stirnseitige Eintrittsöffnung (46) aufweisen.

8. Filtervorrichtung nach einem der Ansprüche 2 bis 7, **dadurch gekennzeichnet, dass** der Filterauslaß (22) randseitig in dem Teil (14) des Filtergehäuses (10) angeordnet ist, das dem Antrieb (34) zugewandt ist, und dass der andere Teil (12) des Gehäuse (10) deckelartig abnehmbar ist und zu seinem freien Ende hin einen Hohlraum (60) aufweist, dessen axiale Erstreckung in etwa der Baulänge der Filterelemente (28) entspricht.

9. Filtervorrichtung nach einem der Ansprüche 1 bis 8, **dadurch gekennzeichnet, dass** der Filtereinlaß (20) und der Fluidauslaß (26) für die Rückspülmenge in dem Teil (14) des Filtergehäuses (10) angeordnet sind, das sich zwischen dem Filterauslaß (22) und dem Antrieb (34) erstreckt.

10. Filtervorrichtung nach einem der Ansprüche 1 bis 9, **dadurch gekennzeichnet, dass** das jeweilige Filterelement (28) aus einem Spaltsiebrohr-Filterelement gebildet ist.
